# EUROPÄISCHE PATENTANMELDUNG

(11) **EP 2 615 399 A2**
(43) Veröffentlichungstag der Anmeldung: **17.07.2013**
(21) Anmeldenummer: 13150759.2
(22) Anmeldetag: 10.01.2013
(51) Int. Cl.: F28F 3/02, F28D 1/03, F28F 9/02, F24J 2/20, F24J 2/46

(54) **Wärmetauscher, insbesondere Sonnenkollektor, mit zwei Platten, Distanzhaltern und Klebstoffverbindungen**

(30) Priorität: 12.01.2012 CH 552012
(71) Anmelder: SOLEDA Holding AG, 9213 Hauptwil (CH)
(72) Erfinder: Solenthaler, Hans, 9200 Gossau (CH)
(74) Vertreter: PATWIL AG

(57) **Zusammenfassung**

Die Wärmetauscher (1) umfassen zwei Platten (2), einen dazwischen ausgebildeten Hohlraum (8) und mindestens zwei Fluid-Anschlüssen (13) an den Hohlraum (8). Zwischen den beiden Platten (2) sind Klebstoffverbindungen (3) und fest angeordnete Distanzhaltern (4, 5, 6, 7) eingesetzt, wobei sich sowohl die Distanzhalter (4, 5, 6, 7) als auch die Klebstoffverbindungen (3) über den gesamten Abstand der Platten (2) bzw. über die gesamte Mächtigkeit des Hohlraums (8) erstrecken und somit die Distanzhalter (4, 5, 6, 7) und die Klebstoffverbindungen (3) senkrecht zu den Plattenebenen die gleiche Ausdehnung aufweisen.

## Beschreibung

Die Erfindung bezieht sich auf einen Wärmetauscher nach dem Anspruch 1 und auf ein Verfahren nach dem Anspruch 14.

Die vorliegende Erfindung betrifft einen Wärmetauscher mit mindestens zwei flächigen Elementen aus Metall, Kunststoff, Glas oder Verbundstoff und mindestens einem zwischen den flächigen Elementen angeordneten Hohlraum sowie mit mindestens zwei Anschlüssen an den mindestens einen Hohlraum, so dass ein Fluid, vorzugsweise eine Flüssigkeit, insbesondere Wasser, gegebenenfalls aber auch ein Gas, durch den mindestens einen Hohlraum zu führen ist, wobei von den mindestens zwei Anschlüssen einer als Zuleitung und einer als Ableitung einzusetzen ist. Solche Wärmetauscher werden auch als Plattenwärmetauscher bezeichnet, weil die flächigen Elemente, beispielsweise Bleche, plattenförmig sind. Wenn anschliessend Platten erwähnt sind, so sind damit flächige Elemente, insbesondere Metallbleche, Kunststoffplatten, Glasplatten, Laminate oder Verbundstoffe gemeint.

Wärmetauscher werden beispielsweise in thermischen Sonnenkollektoren verwendet, wobei absorbierte Sonnenwärme über mindestens eine der mindestens zwei Platten in das Fluid gelangt, das durch den Hohlraum geführt wird. Dabei kann eine der mindestens zwei Platten als Absorberplatte ausgebildet sein, welche zumindest einen Teil der Wärmestrahlung der Sonne absorbiert. Gegebenenfalls ist die Absorberfläche nicht direkt eine der mindestens zwei Platten des Wärmetauschers, wobei dann die Wärme von der Absorberplatte zu mindestens einer Platte des Wärmetauschers fliessen muss. Dazu kann die Absorberplatte beispielsweise an einer der Platten des Wärmetauschers in Wärmeleitungskontakt befestigt werden. Die Absorberplatte kann dann gegebenenfalls auch als Fotovoltaikelement ausgebildet sein, so dass sowohl elektrische Energie als auch Wärmeenergie bereitgestellt wird. Mit dem Abführen der Wärmeenergie über den Wärmetauscher kann ein Fotovoltaikelement auf einer optimalen Betriebstemperatur gehalten werden.

Wärmetauscher können aber auch einen Wärmeaustausch zwischen dem Fluid in einem ersten Hohlraum und mindestens einem anderen Fluid in einem weiteren Hohlraum oder der Umgebung, insbesondere der Luft, des Wassers oder der Erde beim Wärmetauscher, gewährleisten. Bei Wärmetauschern mit mindestens zwei Fluiden in Wärmeleitungskontakt, können die Fluide in getrennten Teilräumen zwischen den gleichen Platten oder in getrennten Hohlräumen zwischen verschieden Plattenpaaren geführt sein. Bei der Verwendung von verschiedenen Plattenpaaren ist beispielsweise eine Platte der beiden Paare als gemeinsame Platte ausgebildet, oder aber es liegen zwei Platten der beiden Plattenpaaren dicht aneinander an. Gegebenenfalls ist zwischen den wärmeleitend verbundenen Platten eine wärmeleitende Verbindungsstruktur ausgebildet, beispielsweise ein gefaltetes Blech oder eine wabenähnliche Struktur. Entscheidend ist ein guter Wärmeübertrag vom einen zum anderen Fluid, bzw. von einer zur anderen Platte.

An die Umgebung gekoppelte Wärmetauscher können in der Aussenumgebung oder in Innenräumen angeordnet werden. In der Aussenumgebung dienen sie der Aufnahme oder Abgabe von Wärme durch ein im Wärmetauscher geführtes Fluid. In Innenräumen dienen die Wärmetauscher der Abgabe von Wärme in den Innenraum oder dem Abführen von Wärme aus dem Innenraum, also dem Bereitstellen einer gewünschten Temperatur im Innenraum.

Ein Wärmetauscher mit lediglich zwei flächigen Elementen bzw. mit zwei Platten wird entsprechend dem jeweiligen Verwendungszweck mit weiteren Elementen ergänzt. Für die Dachmontage von Sonnenkollektoren werden meist Gehäuse verwendet. Die Gehäuse umfassen beispielsweise Befestigungsmittel zum festen Anordnen der Sonnenkollektoren an Dach- oder Tragelementen. Vorzugsweise wird ins Gehäuse eine Isolierung eingelegt, auf welche dann der Wärmetauscher zu liegen kommt. Als oberer Gehäuseabschluss wird gegebenenfalls eine Glasplatte eingesetzt. Die mindestens zwei Anschlüsse des Wärmetauschers müssen durch das Gehäuse nach aussen geführt werden. Aufgrund von grossen Temperaturschwankungen der Wärmetauscher von Sonnenkollektoren müssen die Anschlüsse so durch das Gehäuse geführt werden, dass Ausdehnungsänderungen des Wärmetauschers nicht zu grossen mechanischen Belastungen bei den Anschlüssen führen.

Bei Heizkörpern sind Anordnungen mit zwei oder mehr voneinander beabstandeten Wärmetauschern bekannt, wobei zwischen den Wärmetauschern Blechstege oder Wabenstrukturen ausgebildet sind, welche die Austauschfläche zur Umgebungsluft vergrössern. Wenn Heizkörper direkt in der Wand angeordnet werden, so ist es vorteilhaft, wenn diese eine möglichst kleine Mächtigkeit und daher nebst den Platten und den Anschlüssen keine weiteren Elemente aufweisen.

EP 1 204 495 B1 beschreibt einen Plattenwärmetauscher mit zwei Blechen, die als Platten des Wärmetauschers gegeneinander vorstehende Verbindungsstellen aufweisen, mit welchen die Plattenflächen in einem gewünschten Abstand gehalten werden, wobei aneinander anliegende Kontaktbereiche der beiden Platten durch Verformung des Materials ineinander verzahnt sind. Diese Verbindungen durch den Hohlraum verhindern Verformungen der Platten auch bei Druckunterschieden zwischen dem Hohlraum und der Aussenseite des Wärmetauschers, so dass beispielsweise ein erhöhter Druck im Fluid des Wärmetauschers zulässig ist. An zwei Seiten sind die Plattenränder dicht verschweisst. Die Platten sind bei zwei voneinander abgewandten Seiten viertelrund aufgeweitet, so dass die Seiten zweier Platten zusammen einen halbkreisförmigen Kontaktbereich bilden, in dem jeweils ein durchgehendes Stirnrohr mit Schlitzen eingelötet wird. Durch die Schlitze ist das Rohrinnere mit dem Hohlraum verbunden. Die mechanische Verzahnung der Kontaktbereiche ist sehr aufwändig. Auch das Bereitstellen und Befestigen der Anschlussrohre ist mit unerwünscht aufwändigen Arbeitsschritten verbunden.

CH 700 886 A1 beschreibt einen analogen Wärmetauscher bei dem zusätzlich ein Montagemantel das Anschlussrohr umgreift und mit dem Anschlussrohr und den Rändern der Metallbleche flüssigkeitsdicht verbunden wird. Zwischen den Seitenrändern der Metallbleche ist eine Pressverbindung ausgebildet. Die Herstellung dieser Wärmetauscher ist sehr aufwändig.

WO02/14771 A2 beschreibt vorstehende Verbindungsstellen zwischen den Metallblechen eines Wärmetauschers, wobei zwischen den Kontaktflächen und den beabstandeten Flächen der Metallbleche Versteifungsränder ausgebildet sind. Das Ausformen der speziellen Versteifungsränder ist aufwändig.

DE 35 41 713 A1 beschreibt einen Kollektor mit einer transparenten Abdeckung und einer Platte, wobei dazwischen Verbindungen aus einer Klebstoffmasse angeordnet sind und die Anschlüsse an der Rückseite der Platte angeordnet sind. Als Klebstoffmasse wird Silikon-Kautschuk erwähnt. Silikon-Kautschuk hat keine genügende Klebeigenschaft für das dauerhafte Verbinden von Wärmetauscher-Platten. Der Abstand zwischen der transparenten Abdeckung und der Platte kann nicht innerhalb einer kleinen Toleranz konstant gehalten werden, was bei kleinen Abständen zu unerwünscht grossen Unterschieden zwischen nacheinander hergestellten Kollektoren führt.

DE 195 46 100 A1 beschreibt einen Kollektor bzw. Absorber mit zwei Wänden und dazwischen Klebstofflinien. Es sind Ausführungen beschrieben, bei denen die beiden Wände aus unterschiedlichen Materialien gefertigt sind, nämlich die der Sonneneinstrahlung zugewandte Wand aus Metallblech und die der Sonneneinstrahlung abgewandte Wand aus Wärmeisolationsgründen aus Kunststoff oder Verbundwerkstoff (Metall und Kunststoff). Entsprechend sind dünne Metallbleche, Kunststoffplatten und auch Kunststofffolien erwähnt. Der aufgeführte Silikonklebstoff ist nicht geeignet für ein dauerhaftes Verkleben von Wärmetauscherplatten. Weil der Anschlussstutzen durch den Klebstoff geführt ist, sind lediglich Wärmetauscher mit relativ grossem Plattenabstand beschrieben.

Um einen gewünschten Abstand zwischen den beiden Wänden gewährleisten zu können, müssen gemäss DE 195 46 100 A1 bis zum Erhärten des Klebstoffes Abstandshalter zwischen den beiden Wänden angebracht und anschliessend entfernt werden. Dies ist mit einem grossen Arbeitsaufwand verbunden. Bei grossen Platten sind Abstandshalter, die sich bis in den mittleren Bereich erstrecken nur schwer zu entfernen und es muss mit Beschädigungen der Klebstofflinien gerechnet werden. Weil die Klebstofflinien zum Abschliessen des Hohlraumes rund um den Wärmetauscher angeordnet sind, müssen für die Abstandshalter Unterbrechungen vorgesehen werden. Daher müssen die Klebstofflinien nach dem Entfernen der Abstandshalter bei den Unterbrechungen ergänzt bzw. geschlossen werden. Die Verbindung der Ergänzungen mit den ursprünglich aufgebrachten Klebstofflinien und das Haften der Ergänzungen an den Wänden kann nicht mit genügender Sicherheit gewährleistet werden, was mit der Gefahr von entstehenden undichten Stellen verbunden ist. Wenn auf Abstandshalter verzichtet wird, sind die Abstände der Wände bereits innerhalb eines Wärmetauschers nicht überall gleich und zwischen nacheinander hergestellten Wärmetauschern muss mit nicht tolerierbaren Abstandsunterschieden gerechnet werden.

In DE 195 46 100 A1 wird vorgeschlagen den Wärmetauscher in einen Rahmen einzusetzen, wobei der Rahmen die beiden Wände des Wärmetauschers relativ zueinander fixieren solle. Diese Massnahme gegen die ungenügende Stabilität und Genauigkeit der Klebverbindung ist mit einem sehr hohen Aufwand verbunden. Als Möglichkeit, um den Bedarf an Klebstoff zu reduzieren, wird eine Ausführung vorgeschlagen bei der mindestens eine der Wände bei den für die Verklebung vorgesehenen Teilflächen bzw. Linien Einprägungen in Richtung zur anderen Wand aufweist. Die aufwändigere Bearbeitung mindestens eines Bleches wird durch den kleineren Klebstoffverbrauch nicht kompensiert.

EP 2 133 635 A2 beschreibt Solarflachkollektoren mit zwei Platten, die aus Kunststoff hergestellt sind, und mit zwischen den Platten als Abstandhalter und Kanalwandungen angeordneten Stegen, von denen mindestens einer als standfester Klebstoff ausgebildet ist. Um Anschlüsse zum Hohlraum zwischen den Platten bereitzustellen, werden Anschlussteile in den auf den Rand einer Platte aufgebrachten Klebstoff eingelegt, bevor die zweite Platte aufgelegt und der Klebstoff ausgehärtet wird. Diese Anschlüsse stehen bei zwei voneinander abgewandten Randbereichen seitlich in der Verlängerung dieser Randbereiche nach aussen über die Platten vor. Die Randbereiche sind so gekrümmt, dass die schmalen stirnseitigen Abschlussflächen der beiden Platten bei einer Verbindungslinie auf einander treffen, wobei neben der Verbindungslinie zwischen den Platten ein aufgeweiteter Einlauf- bzw. Auslaufbereich ausgebildet ist. Die Verbindung zwischen den schmalen stirnseitigen Abschlussflächen der beiden Platten können nicht genügend dicht ausgebildet werden. Bereits beim Zusammenführen der schmalen stirnseitigen Abschlussflächen am Ende der gekrümmten Randbereiche können Abweichungen von der Verbindungslinie nur mit sehr grossem Bearbeitungsaufwand verhindert werden. Auch beim Einsatz der Kollektoren ergeben sich Dichtheitsprobleme, weil aufgrund von grossen Temperaturschwankungen und Temperaturunterschieden zwischen den Platten grosse und insbesondere zwischen den Platten unterschiedliche Ausdehnungsänderungen auftreten. Probleme mit den Verbindungen treten besonders bei dünnen Platten auf, weil dann die Verbindungen sehr schmal sind. Die Plattenabstände können mit Stegen aus standfestem Klebstoff nicht genügend genau eingehalten werden. Der für dichte Kollektoren nötige Herstellungsaufwand ist sehr gross und zudem sind die Einsatzmöglichkeiten aufgrund der durch den Klebstoff geführten seitlichen Anschlüsse eingeschränkt.

Die erfindungsgemässe Aufgabe besteht nun darin Wärmetauscher mit genauen Plattenabständen und dichten Hohlräumen zu finden, die einfach herzustellen sind. Zudem soll eine einfache Anschlussmöglichkeit und eine vielfältige Einsetzbarkeit gewährleistet werden.

Die Aufgabe wird durch die Merkmale der unabhängigen Patentansprüche gelöst. Die abhängigen Patentansprüche beschreiben alternative bzw. vorteilhafte Ausführungsvarianten, welche weitere Aufgaben lösen.

Bei der Herstellung von Wärmetauschern mit zwei Platten, bzw. mit zwei Teilen aus Flachmaterial, einem dazwischen ausgebildet Hohlraum und Klebstoffverbindungen zwischen den beiden Platten werden im Wärmetauscher fest - und damit verbleibend - angeordnete Distanzhalter im Bereich des Hohlraumes vorgesehen, wobei sich die Klebstoffverbindungen über die gesamte Mächtigkeit des Hohlraumes, insbesondere über den neben den Distanzhaltern bestehenden Abstand der Platten, erstrecken. Die Distanzhalter gewährleisten vor bzw. während dem Aushärten der Klebstoffverbindungen beim Zusammenpressen der Platten eine definierte Abstandslage, so dass die Klebstoffverbindungen anschliessend die gewünschte Mächtigkeit des Hohlraums zwischen den Platten aufweisen. Für die Klebstoffverbindungen wird vor dem Zusammenpressen der Platten an den gewünschten Stellen eine Klebstoffmasse auf mindestens eine der Platten aufgetragen. Im fertigen Wärmetauscher erstrecken sich sowohl die Distanzhalter als auch die Klebstoffverbindungen über den gesamten Abstand der Platten und haben daher senkrecht zu den Plattenebenen die gleiche Ausdehnung.

Die Mächtigkeit der Hohlräume von Wärmetauschern, die als thermische Sonnenkollektoren eingesetzt werden, liegt vorzugsweise im Bereich von 0.5 bis 5mm, gegebenenfalls von 1 bis 2.2mm, insbesondere bei im Wesentlichen 1.6mm. Es versteht sich von selbst, dass jeweils entsprechend der Verwendung des Wärmetauschers die Mächtigkeit auch anders gewählt werden kann.

In einer bevorzugten Ausführungsform werden die Distanzhalter als im Wesentlichen kugelförmige Teilchen der Klebstoffmasse beigegeben. Die Klebstoffmasse wird dann zusammen mit den darin enthaltenen Distanzhaltern auf eine der Platten an den gewünschten Verbindungsstellen aufgetragen. Dazu können die kugelförmigen Teilchen vorgängig in die Klebstoffmasse eingemischt werden und mit der Auftragsvorrichtung für die Klebstoffmasse aufgetragen werden, wobei dann die verwendeten Austragsdüsen für das Auftragen der Klebstoffmasse mit den kugelförmigen Teilchen geeignet sein müssen. Gegebenenfalls werden die kugelförmigen Teilchen erst auf die bereits aufgetragene Klebstoffmasse aufgebracht. Anschliessend wird die zweite Platte aufgelegt und bis an einen von den Distanzhaltern gebildeten Anschlag gedrückt. Dabei werden auch Teilchen, die erst auf die bereits aufgetragene Klebstoffmasse aufgebracht wurden, in die Klebstoffmasse eingedrückt bis sie im Kontakt mit beiden Platten sind. Nach dem Aushärten der Klebstoffmasse ist eine exakt dem Durchmesser der kugelförmigen Teilchen entsprechende Hohlraum-Mächtigkeit gewährleistet und die kugelförmigen Teilchen sind in zumindest einem Teil der Klebstoffverbindungen angeordnet. Die gewünschte Hohlraum-Mächtigkeit kann dabei mit flachen Platten bzw. Elementen aus Flachmaterial ohne vorgängige Bearbeitung erzielt werden. Wenn als Platten Elemente aus flexiblem Flachmaterial verwendet werden, so müssen flächig zusammenführende Pressvorrichtungen verwendet werden. Für das Aufbringen der Klebstoffmasse können schnelle Klebroboter eingesetzt werden, die so modifiziert werden, dass sie direkt Klebstoffmasse mit kugelförmigen Teilchen auftragen, oder dass sie mit einer Zusatzvorrichtung die kugelförmigen Teilchen auf die aufgetragene Klebstoffmasse aufbringen. Bei dieser Ausführungsform kann auf eine Bearbeitung der Platten verzichtet werden. Die Herstellung der Wärmetauscher ist äusserst einfach und ein gewünschter Plattenabstand kann mit einer hohen Genauigkeit gewährleistet werden.

In einer weiteren Ausführungsform werden die Distanzhalter von vorstehenden Teilflächen mindestens einer Platte gebildet, wobei diese vorstehenden Teilflächen jeweils gegen die andere Platte vorstehen und die gesamte Vorstehhöhe bei den vorstehenden Teilflächen der Mächtigkeit des Hohlraumes entspricht. Weil sich die Klebstoffverbindungen über den gesamten, neben den Distanzhaltern, bzw. neben den vorstehenden Teilflächen, bestehenden, Abstand der Platten erstrecken, ist eine sichere Klebstoffverbindung gewährleistet. Um einen präzisen Anschlag zu gewährleisten wird an den Kontaktflächen der vorstehenden Teilflächen keine Klebstoffmasse angeordnet. Bei dieser Ausführungsform wird eine Bearbeitung der Platten benötigt, es kann aber darauf verzichtet werden, die aneinander anliegende Kontaktbereiche der beiden Platten durch Verformung des Materials ineinander zu verzahnen. Die Herstellung der Wärmetauscher ist aufgrund der Klebstoffverbindungen einfacher und ein gewünschter Plattenabstand kann mit einer hohen Genauigkeit gewährleistet werden.

In einer weiteren Ausführungsform werden die Distanzhalter von auf eine bei der Herstellung des Wärmetauschers unten liegende Platte aufgelegten Teilen gebildet. Weil sich die Klebstoffverbindungen über den gesamten, neben den Distanzhaltern, bzw. neben den aufgelegten Teilen, bestehenden Abstand der Platten erstrecken, ist eine sichere Klebstoffverbindung gewährleistet. Um einen präzisen Anschlag zu gewährleisten, wird auf den gegen die Platten gerichteten Kontaktflächen der aufgelegten Teile keine Klebstoffmasse angeordnet. Damit die Teile aber fixiert sind, wird um die oder zumindest seitlich bei den aufgelegten Teilen Klebstoffmasse angeordnet. Bei dieser Ausführungsform wird ein zusätzliches Aufbringen von Teilchen benötigt. Die Herstellung der Wärmetauscher ist aber aufgrund der Klebstoffverbindungen einfacher und ein gewünschter Plattenabstand kann mit einer hohen Genauigkeit gewährleistet werden.

Wenn der Plattenabstand nicht sehr genau eingestellt sein muss, können die Distanzhalter von Klebstoffmasse gebildet werden, wobei die Klebstoffmasse beim Auftragen eine Viskosität von mindestens 90'000 cP (Centipoise bzw. mPa*s=Millipascalsekunde), insbesondere mindestens 100'000 cP, vorzugsweise im Wesentlichen 110'000 cP aufweist. Die Klebstoffmasse wird tropfen- oder strangförmig bzw. an Distanzhalte-Punkten oder entlang von Distanzhalte-Linien auf eine bei der Herstellung des Wärmetauschers unten liegende erste Platte aufgebracht mit der sie nach dem Aushärten fest verbunden sind. Die von der ersten Platte wegführende Ausdehnung der aufgetragenen Klebstoffmasse ist etwas grösser als die Mächtigkeit des gewünschten Hohlraums des Wärmetauschers, insbesondere wird diese Ausdehnung im Bereich der 1.05 bis 1.8 fachen, vorzugsweise der 1.2 fachen Hohlraummächtigkeit gewählt. Die als Distanzhalter eingesetzten Klebstoffmasse-Tropfen oder -Stränge werden vorzugsweise vor der Klebstoffmasse für die Klebstoffverbindungen aufgebracht, damit sie beim Auflegen der zweiten Platte bereits etwas weiter ausgehärtet sind als die restliche für die Klebstoffverbindungen aufgebrachte Klebstoffmasse. Gegebenenfalls werden die als Distanzhalter eingesetzten Klebstoffmasse-Tropfen oder -Stränge in einem getrennten Auftragsschritt so lange vor der restlichen Klebstoffmasse aufgebracht, dass die Aushärtung im Wesentlichen abgeschlossen ist, wenn die zweite Platte aufgelegt wird. Es ist auch möglich für die Distanzhalter einen Klebstoff mit einer äusserst kurzen Aushärtungszeit zu verwenden, so dass die beiden Klebstoffmassen im Wesentlichen gleichzeitig aufgetragen werden können und beim Auflegen der zweiten Platte unterschiedlich stark ausgehärtet sind.

Aufgrund ihrer hohen Viskosität verformen sich die Klebstoffmasse-Tropfen oder - Stränge ohne Presskräfte nur wenig. Sie können als Distanzhalter eingesetzt werden. Die zweite Platte wird nach dem Auflegen auf die Klebstoffmasse auf der ersten Platte soweit mit einem flächigen Presselement angepresst bis die gewünschte Hohlraummächtigkeit bzw. der gewünschte Plattenabstand erreicht ist. Die folgenden Parameter, nämlich die Viskosität, der vor und beim Pressen bereits erfolgte Aushärtungsgrad, die Ausdehnung der Bereiche mit aufgetragener Klebstoffmasse und die von der ersten Platte wegführende Ausdehnung der aufgetragenen Klebstoffmasse im Verhältnis zur Mächtigkeit des gewünschten Hohlraums können so gewählt werden, dass eine gewünschte gegen die Pressbewegung wirkende, vom Plattenabstand abhängige Kraft erzielt wird. Aufgrund dieser Kraft wirken die als Distanzhalter eingesetzten Klebstoffmasse-Tropfen oder -Stränge während des Aushärtens zunehmend mehr als Distanzhalter. Nach dem Erreichen der gewünschten Abstandslage der beiden Platten, nämlich in der Pressendposition des flächigen Presselements, stellen die als Distanzhalter eingesetzten Klebstoffmasse-Tropfen oder -Stränge eine gewünschte Kraft gegen das Presselement bereit. In der damit festgelegten Abstandslage der beiden Platten wird von der restlichen Klebstoffmasse die gewünschte Klebstoffverbindung ausgebildet. Durch die Verwendung von Klebstoffmasse für Distanzhalter kann auf das Zuführen von weiteren Teilen und auf eine Bearbeitung der Platten verzichtet werden.

Bei bevorzugten Ausführungsformen ist der Hohlraum an allen vier Seiten des Wärmetauschers mit Abschluss-Klebstoffverbindungen dicht verschlossen, nur die FluidAnschlüsse bilden Verbindungen von aussen zum Hohlraum.

Die Klebstoffverbindungen verbinden die Platten durch Flächenhaftung (Adhäsion) und innere Festigkeit (Kohäsion). Besonders vorteilhaft können chemisch härtende Klebstoffe eingesetzt werden, insbesondere Polymerisationsklebstoffe. Die Verfestigung wird durch chemische Reaktion erreicht. Grundsätzlich unterscheidet man bei den Reaktionsklebstoffen zwischen zwei- (oder mehr-) komponentigen und einkomponentigen Systemen.

Bei 2-Komponenten-Klebstoffen (kurz: 2K-Klebstoffe) werden zwei räumlich getrennte Zubereitungen eingesetzt, die meist mit "A" und "B" bezeichnet sind. In diesen befinden sich die Monomere, Grundbausteine des bei der Reaktion entstehenden Polymers. Eine der beiden Zubereitungen enthält Harzmonomere (oder auch Binder), während die andere Härter enthält. Als weitere Inhaltsstoffe der Zubereitungen können Stabilisatoren, Thixotropiermittel, Beschleuniger, weitere Additive, Farb- oder Füllstoffe zum Einsatz kommen. In den meisten Fällen müssen die beiden Komponenten vor der Applikation im korrekten Verhältnis intensiv vermischt werden. Mit dem Kontakt von Harz und Härter startet die chemische Reaktion zum Klebstoffpolymer. Dies bedingt, dass 2K-Klebstoffe nur innerhalb der sog. Topfzeit verarbeitbar sind. Durch die fortschreitende Reaktion nimmt die Viskosität der Mischung stetig zu und kann schließlich nach Überschreiten der Topfzeit die zu verbindenden Oberflächen nicht mehr benetzen. Nach dem Aufbringen des Klebstoffs folgt die Aushärtezeit, in der sich die Endfestigkeit der Verklebung aufbaut. Diese Aushärtezeit wird stark von äusseren Einflüssen, besonders der Temperatur, beeinflusst. Temperaturerhöhung führt zu einer beschleunigten Aushärtung und oft auch zu einer höheren Festigkeit, während niedrigere Temperaturen die Aushärtezeit verlängern. Für besondere Anwendungsfälle sind auch Drei- oder Mehrkomponentenklebstoffe einsetzbar.

Bei 1-Komponenten-Klebstoffen (1 K-Klebstoffen) wird der gebrauchsfertig verkaufte Klebstoff direkt aufgetragen. Der Klebstoff härtet dann durch Veränderung der Umgebungsbedingungen aus. Dies kann beispielsweise durch Temperaturerhöhung geschehen. Auch bei den chemisch härtenden 1-Komponentenklebstoffen sind chemische Reaktionen zwischen Harzmonomeren und Härter für den Aufbau des Polymers verantwortlich. Sie können aber bei den richtigen Lagerungsbedingungen nicht bzw. nur extrem langsam miteinander reagieren.

Bei den Polymerisationsklebstoffen sind Methylmethacrylat-Klebstoffe (MMA), auch als Methacrylat-Klebstoffe bezeichnet, besonders geeignet für die Klebstoffverbindungen zwischen den Platten von Wärmetauschern. Methylmethacrylat-Klebstoffe sind zwei-komponentige Reaktionsklebstoffe, bei denen das eingesetzte Monomer - der Methylester der Methacrylsäure - durch radikalische Kettenreaktion polymerisiert wird. Zum Start der Polymerisationsreaktion wird ein reaktives Radikal benötigt, das meist aus einem Peroxid entsteht, wenn man diesem einen Beschleuniger zusetzt. Es wird daher das Peroxid im Methylmethacrylat-Monomer als eine Komponente und der Beschleuniger gelöst im Basis-Monomer als zweite Komponente in den Handel gebracht. Durch Mischen beider Komponenten wird die Radikalkettenreaktion initiiert und der Klebstoff härtet durch. Eine andere Variante bringt das gesamte Monomer und das Peroxid in eine Komponente und verwendet als zweite Komponente nur noch den Beschleuniger. Bei dieser Variante muss die Hauptkomponente auf eine Platte und der Beschleuniger auf die andere Platte aufgetragen werden. Durch Zusammenfügen der Flächen kommen die beiden Komponenten in Kontakt und die Radikalreaktion startet.

Methylmethacrylat-Klebstoffe können vorteilhaft zur strukturellen Verklebung von Metallen, Glas, Kunststoff, Keramik und auch Hartholz eingesetzt werden. Die wesentlichen Eigenschaften sind: Aushärtung bei Raumtemperatur, hohe Festigkeiten (bis zu 25 N/mm²), bei 10:1-MMA-Klebstoffen zusätzlich auch hohe Elastizitäten (bis zu 120 % Dehnung), schnelle Aushärtung (1 min. - 90 min. offene Zeit, handfest in 5-120 min.) und Unempfindlichkeit gegenüber etwas fetthaltigen Oberflächen. Durch die Kombination aus hoher struktureller Festigkeit und Elastizität ergeben sich viele Vorteile im Vergleich zu anderen Klebstoffsystemen, die entweder hochfest, aber relativ spröde (z.B. Epoxidharze) oder elastisch, aber mit geringer Festigkeit (z.B. Polyurethan) sind. Dabei sind MMAs (Methylmethacrylat-Klebstoffe) für den Aussenbereich (UV-, Chemikalien- und Wasserbeständig) und für Einsatztemperaturen von -40 bis +120 °Celsius geeignet. Geeignete handelsübliche Kleber werden beispielsweise unter den Bezeichnungen "Plexus MA 420" oder "Permabond TA 437" verkauft.

Es wäre auch möglich Epoxidharz-Klebstoffe (kurz: Epoxi-Klebstoffe) einzusetzen. Diese sind zweikomponentig aus Harz und Härter aufgebaut. Als Epoxidharz werden Polymerbausteine verwendet, die am Ende sogenannte Epoxidgruppen tragen. Meist werden dazu die Reaktionsprodukte aus Bisphenol-A und Epichlorhydrin eingesetzt, die nach dem Vermischen mit dem Härter, der Amino- oder Mercaptogruppen enthält, einen stabilen Duroplasten bilden. Die Aushärtereaktion kann sowohl bei Raumtemperatur als auch bei höherer Temperatur vorgenommen werden. Im letzteren Fall werden üblicherweise höhere Festigkeiten der Klebung erzielt. Der ausgehärtete Klebstoff besitzt eine sehr hohe Festigkeit. Epoxidharz-Klebstoffe haben bei kleinen Spaltmassen von 0,3 bis 0,5 mm die höchsten Festigkeiten. Mit Zugaben von kleinen Teilchen im Durchmesserbereich von 0,3 bis 0,5 mm kann bei grösseren Spaltmassen die Überschreitung der optimalen Klebschichtdicke verhindert werden. Für Klebstoffverbindungen über den mehr als 1 mm mächtigen Hohlraum eines Wärmetauschers sind diese Klebstoffe somit nicht vorteilhaft einsetzbar. Zudem erfordern sie eine stabile und genaue Prozessführung bei der Applikation und Aushärtung.

Bei bevorzugten Wärmetauscher wird mindestens eine Platte von einem Blech gebildet, insbesondere aus Aluminiumblech. Es versteht sich von selbst, dass auch Bleche aus anderen Metallen verwendet werden können. Die Blechdicke liegt vorzugsweise im Bereich von 0.2 bis 2.2mm, gegebenenfalls 0.8 bis 1.6mm, insbesondere bei im Wesentlichen 1.2mm, wobei die beiden Bleche auch unterschiedlich dick sein können. Das mindestens eine Blech weist an zwei voneinander abgewandten Seitenbereichen des Wärmetauschers rohrsegmentförmige Bereiche auf, wobei die Platten im zusammengefügten Zustand bei beiden voneinander abgewandten Seitenbereichen des Wärmetauschers einen Rohrbereich, bzw. einen Erschliessungsbereich, bilden, der gegen den Hohlraum zwischen den Blechen offen ist und an dem mindestens ein Anschluss angeordnet ist.

Um zu gewährleisten, dass der über Fluidanschlüsse an einen Fluidkreislauf angeschlossene Hohlraum zwischen den Blechen eines Wärmetauschers auf seiner gesamten Breite durchströmendes Fluid aufweist, sind den Fluidanschlüssen Erschliessungsbereiche zugeordnet, die sich über einen grossen Anteil der Plattenbreite, oder gegebenenfalls Plattenlänge, erstrecken und je nahe bei Seitenrändern der Bleche liegen. Die Erschliessungsbereiche haben Innenräume, die quer zu den Ebenen der Bleche eine grössere Ausdehnung haben als der Hohlraum zwischen den Blechen. Dadurch ist der Strömungswiderstand in den Erschliessungsbereichen sehr klein und das Fluid kann ungehindert in den benötigten Mengen zu den ,bzw. von den, Anschlussbereichen des Hohlraumes zugeführt bzw. abgeführt werden.

Die Erschliessungsbereiche werden durch mindestens einen Tiefziehschritt an einer Platte ausgeformt, wobei sich der tiefgezogene Bereich nicht bis zu den Seitenrändern des Wärmetauschers erstreckt. Beim Tiefziehen wird die Plattendicke bei den Erschliessungsbereichen etwas verkleinert. Die Platte mit den tiefgezogenen Erschliessungsbereichen umfasst rund um die Erschliessungsbereiche Randbereiche, welche von der ursprünglichen Platteninnenseite gebildet werden und in der Ebene dieser Innenseite liegen. Wenn nun eine ebene Platte mit einer Platte mit tiefgezogenen Erschliessungsbereichen entlang des äusseren Plattenumfangs dicht verbunden wird, so sind der gesamte Hohlraum zwischen den beiden Platten und die Erschliessungsbereiche gegen aussen dicht verschlossen. Vor dem Tiefziehen können für die Fluidanschlüsse an gewünschten Anschlusssstellen Löcher in die Platte gestanzt werden. Gegebenenfalls werden vor dem Verbinden der Platten von der Innenseite der Erschliessungsbereiche her Anschlussstutzen dicht in die Löcher eingesetzt, wobei die dichte Verbindung durch Schweissen, Kleben oder auch mit Schraubverbindungen und Dichtungsringen erzielt wird. Als Platten werden vorzugsweise Bleche verwendet.

Zwischen den Erschliessungsbereichen und dem äusseren Rand der Platten bzw. des Wärmetauschers ist ein vollständig umlaufender Verbindungsbereich ausgebildet, welcher auch bei den tiefgezogenen Erschliessungsbereichen in der Ebene der ursprünglichen Platteninnenseite liegt. Der umlaufende Verbindungsbereich kann so breit gewählt werden, dass das Zusammentreffen der zu verbindenden umlaufenden Verbindungsbereiche der beiden Platten ohne Präzisionsarbeit gewährleistet ist. Wenn der Hohlraum an allen vier Seiten des Wärmetauschers also entlang der gesamten umlaufenden Verbindungsbereiche mit Abschluss-Klebstoffverbindungen dicht verschlossen wird, kann die Breite der umlaufenden Verbindungsbereiche so gewählt werden, dass die gewünschten Verbindungskräfte zwischen den beiden Platten ohne besonderen Aufwand erzielt werden. Die Ausdehung des Verbindungsbereichs hängt nicht von der Mächtigkeit der Platten ab. Zudem ist der Abstand zwischen den zu verbindenden Verbindungsbereichen entlang des gesamten Umfangs des Wärmetauschers gleich gross. Es können daher bereits mit kleinem Herstellungsaufwand dichte Klebstoffverbindungen hoher Qualität erzielt werden.

Es gibt Anwendungen bei denen die Fluidanschlüsse nicht am seitlichen Rand des Wärmetauschers erwünscht sind, weil dadurch beispielsweise ein direktes seitliches aneinander Anschliessen der Wärmetauscher nicht möglich ist. Die Fluidanschlüsse werden auf der Rückseite der Wärmetauscher mit ihren Achsen quer, insbesondere senkrecht, zur Wärmetauscheroberfläche ausgerichtet an den Erschliessungsbereichen ausgebildet. Weil die rückseitig angeordneten Anschlüsse bei der Montage der Wärmetauscher eine grössere Bauhöhe senkrecht zur Wärmetauscheroberfläche erfordern, sind auch Ausführungsformen vorteilhaft, bei denen die Achsen der Fluidanschlüsse parallel zur Wärmetauscheroberfläche verlaufen, wobei die Achsen der Anschlüsse dann entweder im Wesentlichen parallel zu den Achsen der Erschliessungsbereiche oder im Wesentlichen senkrecht dazu verlaufen können. Wenn sie parallel zu den Achsen der Erschliessungsbereiche verlaufen, so dürfen sich die Erschliessungsbereich nicht bis zu den Seitenrändern der Wärmetauscher erstrecken. Bei Erschliessungsbereichen, die durch einen Tiefziehschritt an einem Blech ausgeformt werden, erstreckt sich der tiefgezogene Bereich nicht bis zum Seitenrand, wobei vorzugsweise vor dem Tiefziehen für die Fluidanschlüsse Löcher in das Blech gestanzt werden, welche nach dem Tiefziehen gegebenenfalls an den seitlichen Enden der Erschliessungsbereiche angeordnet sind.

Wie oben beschrieben wird der stabile Hohlraum durch Distanzhalter und Klebstoffverbindungen gewährleistet. Zudem muss der Hohlraum an den Seiten des Wärmetauschers dicht verschlossen werden. Zum dichten Verschliessen des Hohlraumes entlang dieser Seiten bzw. Bereiche kann eine beliebige aus dem Stande der Technik bekannte Lösung beispielsweise eine Falzverbindung sowie eine Schweiss- oder Lötverbindung eingesetzt werden. Vorzugsweise wird aber auch für das dichte Verschliessen des Hohlraumes entlang dieser Seiten bzw. Bereiche eine Klebstoffverbindung eingesetzt. Die Klebstoffmasse für alle gewünschten Klebstoffverbindungen wird daher bereits vor dem Zusammenstellen der Platten auf diese aufgetragen.

Die Wärmetauscher können optimal an vielseitige Einsatzmöglichkeiten angepasst werden. Wenn sie als Sonnenkollektoren an Fassaden oder auf Dächer montiert werden, so sind Ausführungen vorteilhaft, bei denen die aneinander anschliessend montierten Wärmetauscher eine zusammenhängende Oberfläche bilden. Dazu eignen sich besonders Lösungen mit einem im Wesentlichen flachen Blech und einem zweiten etwas dünneren Blech an dem tiefgezogene Erschliessungsbereiche ausgebildet sind. Die im Wesentlichen flachen Bleche werden gegen aussen bzw. gegen die Umgebung gerichtet und sind gegebenenfalls an den Rändern so ausgebildet, dass beispielsweise für Dächer Montagen mit gewünschten Überlappungen möglich sind. Die gegen die Umgebung gerichteten Oberflächen sind so behandelt, insbesondere mit Farbbeschichtungen oder Pulverbeschichtungen versehen, dass sie nicht als technische Elemente in Erscheinung treten sondern als ästhetisch ansprechende Fassaden oder Dachelemente. Um Oberflächenverformungen des sichtbaren Bleches aufgrund von Temperatur oder Fluiddruck bedingten Verformungen zu vermeiden, wird das nicht sichtbare Blech schwächer oder mit Verformungsbereichen ausgebildet, so dass die Verformung nicht am sichtbaren Blech auftritt. Der jeweiligen Montage entsprechende Befestigungselemente können am nicht sichtbaren Blech, vorzugsweise mittels Klebstoffverbindungen, befestigt werden. Die Fluidanschluss-Verbindungen werden beim Montieren auf der nicht sichtbaren Rückseite der Sonnenkollektoren ausgebildet.

Für die Dachmontage von Sonnenkollektoren werden meist Gehäuse verwendet. Die Gehäuse umfassen beispielsweise Befestigungsmittel zum festen Anordnen der Sonnenkollektoren an Dach- oder Tragelementen. Vorzugsweise wird ins Gehäuse eine Isolierung eingelegt, auf welche dann der Wärmetauscher zu liegen kommt. Als oberer Gehäuseabschluss wird gegebenenfalls eine Glasplatte eingesetzt, wobei zwischen der Glasplatte und dem Gehäuse insbesondere Dichtungselemente angeordnet werden. Die mindestens zwei Anschlüsse des Wärmetauschers müssen durch das Gehäuse nach aussen geführt werden. Aufgrund von grossen Temperaturschwankungen der Wärmetauscher von Sonnenkollektoren müssen die Anschlüsse so durch das Gehäuse geführt werden, dass Ausdehnungsänderungen des Wärmetauschers nicht zu grossen mechanischen Belastungen bei den Anschlüssen führen.

Auch unabhängig von den in den Patentansprüchen beanspruchten Erfindungen sind Lösungen neu und erfinderisch, welche gemäss einer bevorzugten Ausführungsform Verbindungs- oder Abschlussstücke durch verschiebbare Durchführungen aus dem Gehäuse führen. Eine für sich erfindungsgemässe verschiebbare Durchführung umfasst ein inneres und ein äusseres Teil, wobei die Teile zusammen an einer Öffnung einer Gehäuse-Seitenwand befestigt werden. Das innere Teil umfasst eine Bohrung mit einem Innengewinde und eine zumindest teilweise um die Bohrung führende, an die Seitenwand anlegbare Dichtung, die an einer ersten Pressfläche des inneren Teils angeordnet ist. Das äussere Teil umfasst eine von aussen an die Seitenwand anlegbare zweite Pressfläche, ein an das Innengewinde angepasstes Aussengewinde und eine Bohrung zur Aufnahme eines Verbindungs- oder Abschlussstücks, wobei an der Bohrung ein Dichtungsring angeordnet ist, der dicht an das Verbindungs- oder Abschlussstück anliegt. Nach dem Verschrauben des inneren Teils mit dem äusseren Teil hat der in der Öffnung der Gehäusewand liegende Bereich der Durchführung etwas Freiraum, so dass Ausdehnungsänderungen des Wärmetauschers zu Verschiebungen der Durchführung in der Öffnung der Gehäusewand führen. Damit können mechanische Belastungen der Verbindungs- oder Abschlussstücke bzw. des damit verbundenen Wärmetauschers vermieden werden.

Die Klebstoffverbindungen, die sich über die gesamte Mächtigkeit des Hohlraums zwischen den Platten erstrecken, können in Schnittebenen parallel zu den Platten beliebige Formen und Ausdehnungen haben. In bevorzugten Ausführungsformen haben die Klebstoffverbindungen gebogene Seitenlinien und sind insbesondere s-förmig ausgebildet. Die Längsausdehnung der gebogenen Seitenlinien erstrecken sich vorzugsweie in Richtungen, die vom einen zum anderen Rohrbereich führen, so dass das vom einen zum anderen Rohrbereich fliessende Fluid in seinem Durchströmungsverhalten beeinflusst wird. Die Klebstoffverbindungen können so zur Dynamisierung der Strömung und zu einem erhöhten turbulenten Strömungsanteil führen. Dies wiederum kann den Wärmeaustausch zwischen den Platten und dem Fluid erhöhen sowie den Strömungswiderstand des Wärmetauschers in einer gewünschten Weise verändern.

Bei einer weiteren bevorzugten Ausführungsform sind auf zwei einander gegenüberliegenden Seiten des Wärmetauschers je zwei getrennte Erschliessungsbereiche ausgebildet und die Klebstoffverbindungen umfassen mindestens eine vom Trennbereich zwischen zwei ersten Erschliessungsbereichen zum Trennbereich zwischen den zwei anderen Erschliessungsbereichen führende durchgängige Trennlinie, so dass zwei getrennte Hohlräume mit je eigenen Erschliessungsbereichen entstehen. Um einen optimierten Wärmeaustausch zwischen Fluiden in diesen zwei Kanälen zu erzielen, werden die beiden Kanäle vorzugsweise mäanderförmig ineinander eingreifend ausgebildet.

Die Zeichnungen erläutern die Erfindung anhand von Ausführungsbeispielen auf die sie aber nicht eingeschränkt ist. Dabei zeigen
Fig. 1 einen zu den Platten senkrechten Längsschnitt durch einen Plattenwärmetauscher mit Klebstoffverbindungen mit kugelförmigen Distanzhaltern,
Fig. 2 einen zu den Platten parallelen Schnitt durch einen Ausschnitt des Plattenwärmetauschers nach Fig. 1,
Fig. 3a und 3b zu den Platten parallele Schnitte durch Klebstoffverbindungen mit kugelförmigen Distanzhaltern,
Fig. 4a und 4b zu den Platten senkrechte Schnitte durch Klebstoffverbindungen mit bzw. ohne kugelförmige Distanzhalter,
Fig. 5 einen zu den Platten senkrechten Längsschnitt durch einen Plattenwärmetauscher mit Klebstoffverbindungen und Distanzhaltern in der Form eines aufgelegten Teilchens bzw. einer vorstehenden Teilfläche,
Fig. 6 einen zu den Platten senkrechten Längsschnitt durch einen Plattenwärmetauscher entlang einer Abschluss-Klebstoffverbindung,
Fig. 7 bis 9 zu den Platten parallele Schnitte durch Wärmetauscher mit Distanzhaltern aus Klebstoffmasse,
Fig. 10a, 10b perspektivische Ansicht eines bzw. Schnitt durch einen Wärmetauscher mit zwei Blechen, von denen eines in voneinander abgewandten Endbereichen tiefgezogene Erschliessungsbereiche aufweist,
Fig. 11 perspektivische Ansicht eines Wärmetauschers mit Verbindungsstücken,
Fig. 11a, 11b gekennzeichnete Ausschnitte aus Fig. 7,
Fig. 12a, 12b Ausschnitte von Schnitten in Quer- bzw. Längsrichtung des Wärmetauschers der Fig. 7,
Fig. 13 perspektivische Ansicht zweier nebeneinander angeordneter Wärmetauscher mit einer eingezeichneten flexiblen Leitung,
Fig. 14 seitliche Ansicht der flexiblen Leitung in der Fig. 13,
Fig. 15 Schnitt durch Ausschnitte eines Fassadenaufbaus mit Mauer, Isolation, Tragvorrichtung für Sonnenkollektoren und Sonnenkollektoren,
Fig. 16 und 17 perspektivische Zusammenstellungszeichnung eines thermischen Kollektors mit einer Fotovoltaik- Platte bzw. einer Glasplatte,
Fig. 18 bis 21 Details eines Gehäuses für einen Sonnenkollektor,
Fig. 22 bis 26 Details einer Durchführung durch das Gehäuse,
Fig. 27 eine schematische Darstellung eines Plattenwärmetauschers mit zwei Kanälen, die mäanderförmig ineinander eingreifend ausgebildet sind.

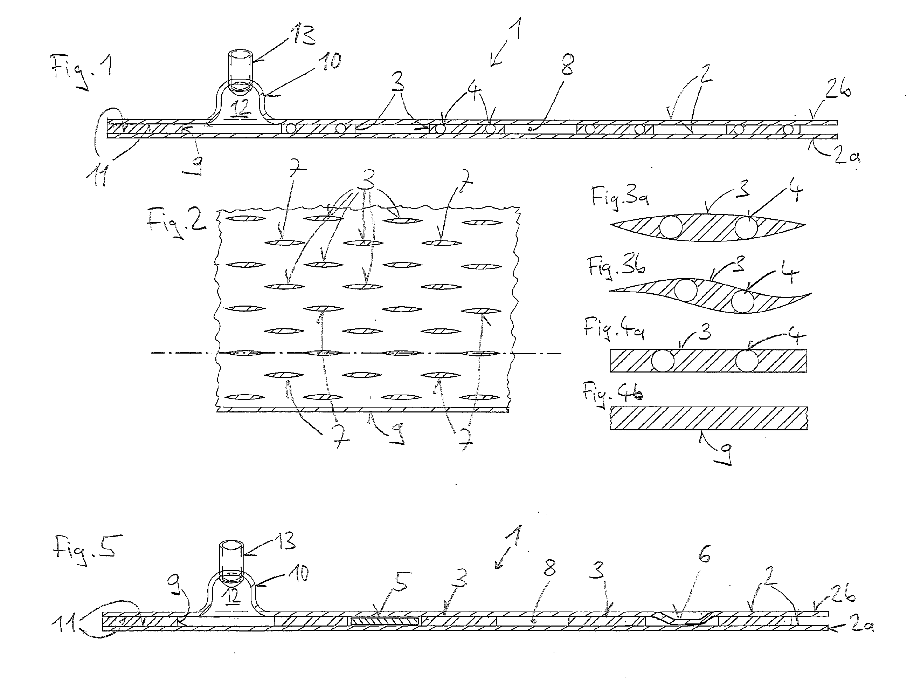

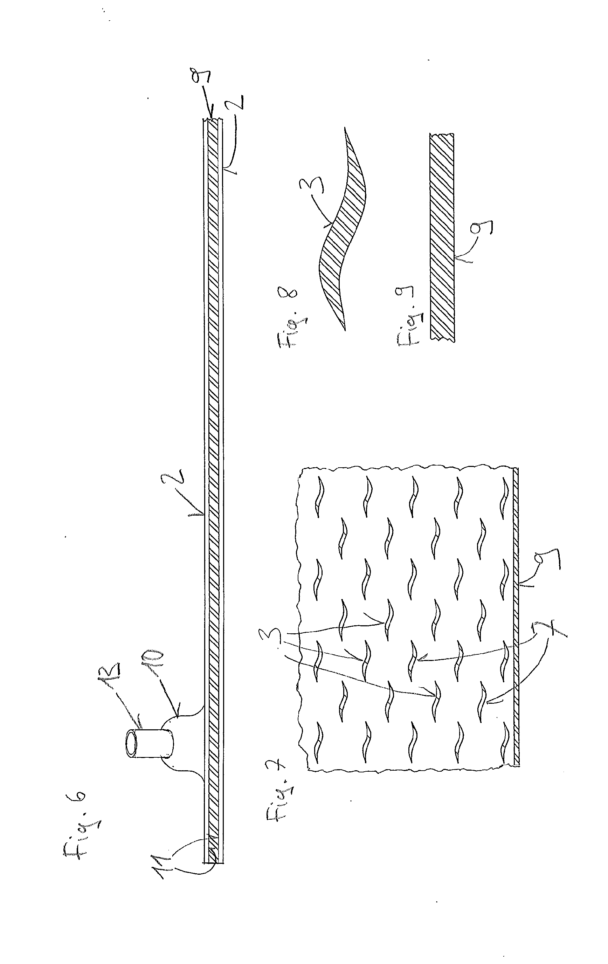

Fig. 1 bis 14 zeigen Plattenwärmetauscher 1, insbesondere Sonnenkollektoren, mit zwei Platten 2 in der Form eines ersten und eines zweiten Blechs 2a bzw. 2b, wobei zwischen den Blechen 2a, 2b Klebstoffverbindungen 3 angeordnet sind. Als Distanzhalter können kugelförmigen Teilchen 4, auf die untere Platte 2 (erstes Blech 2a), aufgelegte Teile 5 oder von mindestens einer Platte 2 gegen die andere vorstehende Teilflächen 6 eingesetzt werden. Distanzhalter können auch von tropfen- oder strangförmig an Distanzhalte-Punkten bzw. entlang von Distanzhalte-Linien auf die untere Platte aufgebrachten Distanzhalter-Klebstoffmassen 7 gebildet werden, wobei die von der unteren Platte 2 (erstes Blech 2a) wegführende Ausdehnung der aufgetragenen Distanzhalter-Klebstoffmasse 7 etwas grösser ist als die Mächtigkeit des gewünschten Hohlraums 8 und die aufgetragene Distanzhalter-Klebstoffmasse 7 beim Auflegen der zweiten Platte 2 bereits etwas weiter ausgehärtet ist als die restliche für die Klebstoffverbindungen 3 aufgebrachte Klebstoffmasse.

Gegebenenfalls genügt bereits die Gewichtskraft der auf die Distanzhalter-Klebstoffmassen 7 und die Klebstoffmassen für die Klebstoffverbindungen 3 aufgelegten zweiten Platte 2 (zweites Blech 2b), um die Distanzhalter-Klebstoffmassen 7 so weit zu komprimieren, dass der gewünschte Plattenabstand erzielt wird. Gegebenenfalls wird die obere Platte mit eine Anpresskraft beaufschlagt, die so gross gewählt wird, dass der gewünschte Plattenabstand erreicht wird. Auch die Klebstoffmassen für die Klebstoffverbindungen 3 stehen etwas weiter von der unteren Platte 2 nach oben als die gewünschte Mächtigkeit des Hohlraums 8, so dass beim Auflegen bzw. Anpressen der oberen Platte 2 zwischen der zweiten Platte und den Klebstoffmassen für die Klebstoffverbindungen 3 eine klebende Haftverbindung erzielt wird.

An zumindest einem der Bleche 2a, 2b, welche die beiden Platten 2 bilden, ist bei zwei voneinander abgewandten Seitenrändern je ein Erschliessungsbereich als rohrsegmentförmiger Bereich 10 mit je einem diesen am Plattenrand umgebenden Verbindungsbereich 11 ausgeformt. Die Ausformungen der rohrsegmentförmigen Bereiche 10 und der Verbindungsbereiche 11 der beiden Bleche 2a, 2b sind so aneinander angepasst, dass sie im zusammengefügten Zustand an beiden voneinander abgewandten Seitenrändern des Wärmetauschers 1 einen Rohrbereich 12 bilden, wobei die Verbindungsbereiche 11 mit einer Abschluss-Klebstoffverbindungen 9 miteinander verbunden sind. Der Rohrbereich 12 ist gegen den Hohlraum 8 zwischen den Blechen offen und umfasst an den rohrsegmentförmigen Bereichen 10 Verbindungs- oder Abschlussstücke 13.

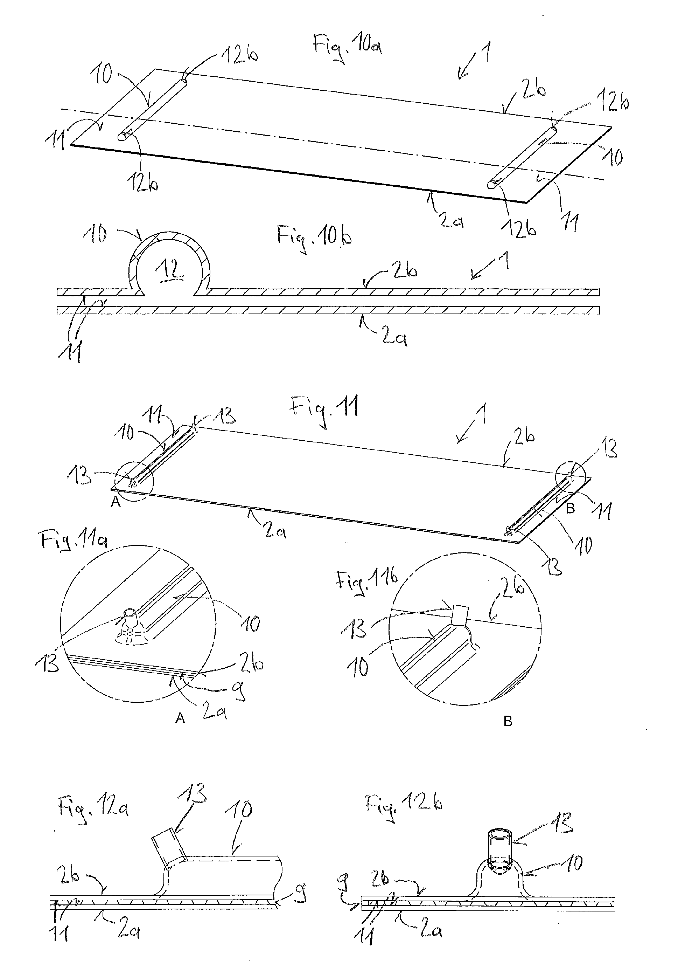

Fig. 10a und 10b zeigen eine Ausführungsform bei der Erschliessungsbereiche in der Form von rohrsegmentförmigen Bereichen 10 durch mindestens einen Tiefziehschritt am zweiten Blech 2b ausgeformt sind, wobei sich die tiefgezogenen Bereiche 10 in der dargestellten Ausführung nicht bis zu den Seitenrändern des Wärmetauschers 1 erstrecken. Die beiden rohrsegmentförmigen Bereiche 10 sind an voneinander abgewandten Endbereichen des zweiten Blechs 2b ausgebildet. Beim Tiefziehen wird die Blechdicke bei den rohrsegmentförmigen Bereichen 10 etwas verkleinert. Das Blech mit den tiefgezogenen Erschliessungsbereichen umfasst rund um die Erschliessungsbereiche Randbereiche, welche in der Ebene der ursprünglichen Blechinnenseite liegen. Wenn ein ebenes Blech 2a mit einem Blech 2b mit tiefgezogenen Erschliessungsbereichen entlang des äusseren Blechumfangs dicht verbunden wird, so ist der gesamte Hohlraum zwischen den beiden Blechen 2a, 2b gegen aussen dicht verschlossen. Vor dem Tiefziehen können für die Fluidanschlüsse an gewünschten Anschlusssstellen Löcher 12b in das Blech 2b gestanzt werden. Gegebenenfalls werden vor dem Verbinden der Bleche 2a, 2b von der Innenseite der Erschliessungsbereiche her Verbindungsstücke 13 dicht in die Löcher 12b eingesetzt, wobei die dichte Verbindung durch Schweissen, Kleben oder auch mit Schraubverbindungen und Dichtungsringen erzielt wird.

Bei den in Fig. 1, 2, 6, 7, 10a bis 17 und 27 dargestellten Ausführungsformen ist der Hohlraum 8 entlang des gesamten Umfangs des Wärmetauschers 1 mit Abschluss-Klebstoffverbindungen 9 dicht verschlossen.

Die verwendete Klebstoffmasse ist vorzugsweise ein Polymerisationsklebstoff, vorzugsweise ein Methylmethacrylat-Klebstoff. Alle Klebstoffmassen werden vor dem Auflegen des zweiten Blechs 2b auf das erste Blech 2a aufgetragen, so dass nach dem Auflegen bzw. Anpressen des zweiten Blechs 2b und nach dem Aushärten der Kebstoffverbindungen 3 und 9 ein fertiger Plattenwärmetauscher 1 mit den beiden Rohrbereichen 12 als Fluid-Zuführungen bereit steht.

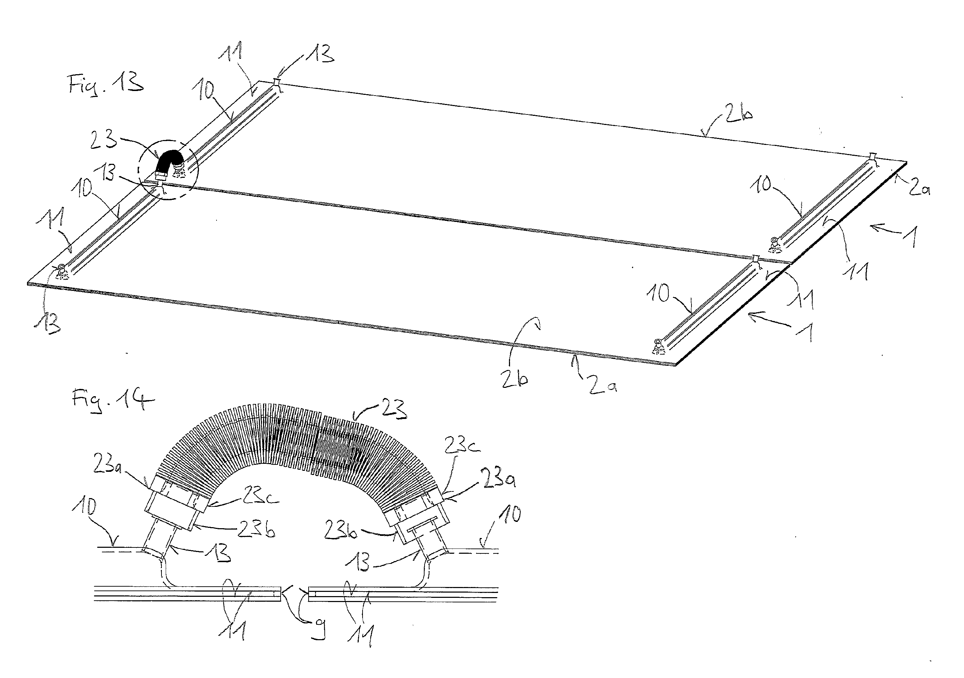

Fig. 11, 11a, 11b und 12a, 12b zeigen einen vielseitig einsetzbaren Wärmetauscher. Die an den rohrsegmentförmigen Bereichen 10 angeordneten Verbindungsstücke 13 stehen seitlich nicht über die Platten 2 bzw. Bleche 2a und 2b vor. Lediglich bei der Seite des zweiten Blechs 2b wird für die rohrsegmentförmigen Bereiche 10 und die Verbindungsstücke 13 ein Freiraum benötig. Bei der dargestellten Ausführungsform liegen die Achsen der Verbindungsstücke 13 in einer senkrecht auf den Platten 2 stehenden und entlang der rohrsegmentförmigen Bereiche 10 ausgerichteten Ebene, wobei sie gegen den in der Achse der rohrsegmentförmigen Bereiche 10 nächstliegenden Plattenrand hin jeweils einen spitzen Winkel bilden. Diese Anordnung der Verbindungsstücke 13 ermöglicht es, dass wie in Fig. 13 und 14 dargestellt die Platten 2 von nebeneinander angeordneten Wärmetauschern 1 direkt aneinander anschliessend angeordnet werden können und die Verbindungsstücke 13 eines ersten Wärmetauschers über flexible Leitungen 23 mit nächstliegenden Verbindungsstücken 13 eines nächsten Wärmetauschers, und/oder mit Zuleitungen bzw. Ableitungen verbunden werden können. Die flexiblen Leitungen 23 umfassen einfach zu befestigende dichte Anschlüsse 23a, die beispielsweise einen Dichtungsring umfassen, der mit einer auf einem Anschlussstück 23c fest zu schraubenden Mutter 23b so festgeklemmt werden kann, dass er zwischen dem Verbindungsstück 13 und dem Anschlussstück 23c einen dichten Abschluss bildet. Es versteht sich von selbst, dass beliebige aus dem Stande der Technik bekannte dichte Verbindungslösungen zwischen den Verbindungsstücken 13 und den flexiblen Leitungen 23 eingesetzt werden können. Wenn die Möglichkeit bestehen muss, dass montierte Wärmetauscher bei Problemen entfernt werden, so sind Verbindungen vorteilhaft, die schnell ausgebildet werden können und auch wieder lösbar sind. Bei Verbindungen, die nicht mehr gelöst werden müssen, sind Verbindungen mit Presshülsen geeignet. Mit Presswerkzeugen können hülsenförmige Pressfittings an aneinander anschliessenden Rohrenden mit kleinem Zeitaufwand festgepresst werden.

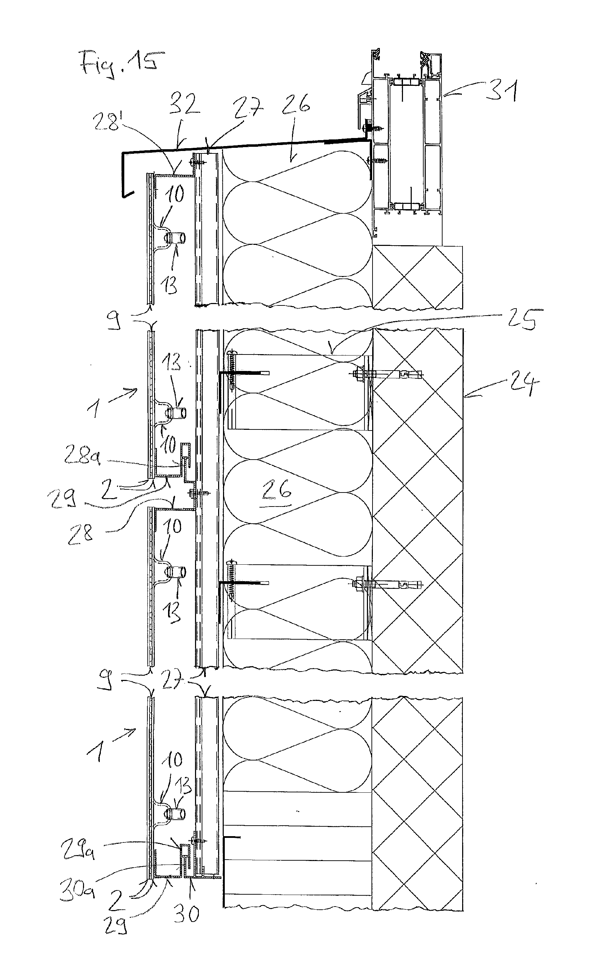

Fig. 15 zeigt eine Fassade mit Wärmetauschern 1, die als Sonnenkollektoren betrieben werden. An der Mauer 24 sind über Verbindungseinrichtungen 25 Tragprofile 27 befestigt. Zwischen der Mauer 24 und den Tragprofilen 27 sind Isolationsplatten 26 an der Mauer 24 befestigt. Um die Wärmetauscher 1 einfach und sicher an den Tragprofilen 27 befestigen zu können, sind an den Wärmetauschern 1 auf der Seite mit den rohrsegmentförmigen Bereichen Halteelemente befestigt, insbesondere festgeklebt oder festgeschweisst. In der dargestellten Ausführungsform ist im montierten Zustand am oberen Ende der Wärmetauscher 1 ein oberes Halteprofil 28 und am unteren Ende der Wärmetauscher 1 ein unteres Halteprofil 29 befestigt. Für den zuunterst montierten Wärmetauscher 1 sind Eingriffprofile 30 an den Tragprofilen 27 befestigt. Die Wärmetauscher 1 werden von unten nach oben montiert. Die unteren Halteprofile 29 umfassen einen ersten Eingriffsbereich 29a, der von oben auf einen passenden zweiten Eingriffsbereich 30a bzw. 28a der Eingriffprofile 30 bzw. der oberen Halteprofile 28 gesetzt werden kann, so dass der Wärmetauscher 1 an seinem unteren Ende an den Tragprofilen 27 gehalten ist. Um auch oben einen festen Halt an den Tragprofilen 27 zu erzielen, werden die oberen Halteprofile 28 mit Befestigungsmitteln, vorzugsweise Schrauben, an den Tragprofilen 27 befestigt. Das obere Halteprofil 28' des obersten Wärmetauschers 1 umfasst keinen zweiten Eingriffsbereich. Der obere Fassadenabschluss umfasst eine obere Abschlussvorrichtung 31 mit einem die Isolationselemente und die Wärmetauscher übergreifenden Abschlussprofil 32.

Beim Montieren der Wärmetauscher 1 werden die Verbindungsstücke 13 entsprechend dem gewählten Anschlussplan miteinander und/oder mit Zuleitungen bzw. Ableitungen verbunden oder verschlossen. Weil die Verbindungsstücke 13 der montierten Wärmetauscher 1 von vorne nicht mehr zugänglich sind, werden die Verbindungsstücke 13 auf einer Seite des Wärmetauschers 1 vor dem Montieren mit den zugeordneten Leitungen verbunden. An den Verbindungsstücken 13 auf der anderen Seite des Wärmetauschers 1 sind weiterführende Leitungen bereits befestigt. Diese sind vorzugsweise als flexible Leitungen ausgebildet und können nach der Montage des Wärmetauschers 1 etwas seitlich über den Rand des Wärmetauschers 1 hinausgezogen werden, so dass sie mit Verbindungsstücken 13 eines nächsten Wärmetauschers 1 verbunden werden können. Der zu montierende nächste Wärmetauscher 1 kann beispielsweise mit einer Montagehilfe oben am bereits montierten Wärmetauscher 1 eingehängt werden, wobei die beiden Wärmetauscher 1 mit ihren von den Verbindungsstücken 13 abgewandten Frontseiten aneiander anliegen. Vor dem Montieren dieses nächsten Wärmetauschers 1 werden die über den Rand des bereits montierten Wärmetauschers 1 vorstehenden flexiblen Leitungen mit den vorstehenden Verbindungsstücken 13 des nächsten Wärmetauschers 1 verbunden. Anschliessend wird der nächste Wärmetauscher 1 vom bereits montierten weggenommen und an den Tragprofilen 27 befestigt. Die flexiblen Leitungen werden dabei hinter die Wärmetauscher geschoben.

Die erfindungsgemässen Wärmetauscher 1 können als Fassadenelemente einer hinterlüfteten Fassade einfach montiert werden. Wenn nicht die gesamte Fassadenfläche mit Sonnenkollektoren belegt werden soll, so können im Rest der Fassade einfache Blechelemente eingesetzt werden. Dies ist insbesondere in Randbereichen vorteilhaft, wenn dort keine Wärmetauscher 1 mit Standardmassen mehr Platz finden. Wenn die Frontseiten der Wärmetauscher 1 und der Blechelemente die gleiche Farbe aufweisen, so erscheint die Fassade einheitlich, obwohl sie zum Teil von Sonnenkollektoren gebildet wird.

Bei Dachflächen können zu den Fassadenaufbauten ähnliche oder andere aus dem Stand der Technik bekannte Aufbauten verwendet werden, wobei die Randbereiche der Wärmetauscher oder daran angeordnete Anschlussbereiche vorzugsweise so ausgebildet sind, dass eine ziegelartige Überlappung erzielt werden kann.

Die als Fassaden- oder Dachelemente eingesetzten Wärmetauscher können auf der Frontseite eine Oberflächenschicht in der Form eines Fotovoltaikelements umfassen. Das gesamte Element kann nun elektrische Energie und Wärmeenergie bereitstellen. Mit dem Abführen der Wärmeenergie über den Wärmetauscher kann das Fotovoltaikelement auf einer optimalen Betriebstemperatur gehalten werden. Die elektrischen Leitungen zu den Fotovoltaikelementen können hinter den Wärmetauschern 1 im Fassaden- oder Dachaufbau angeordnet werden.

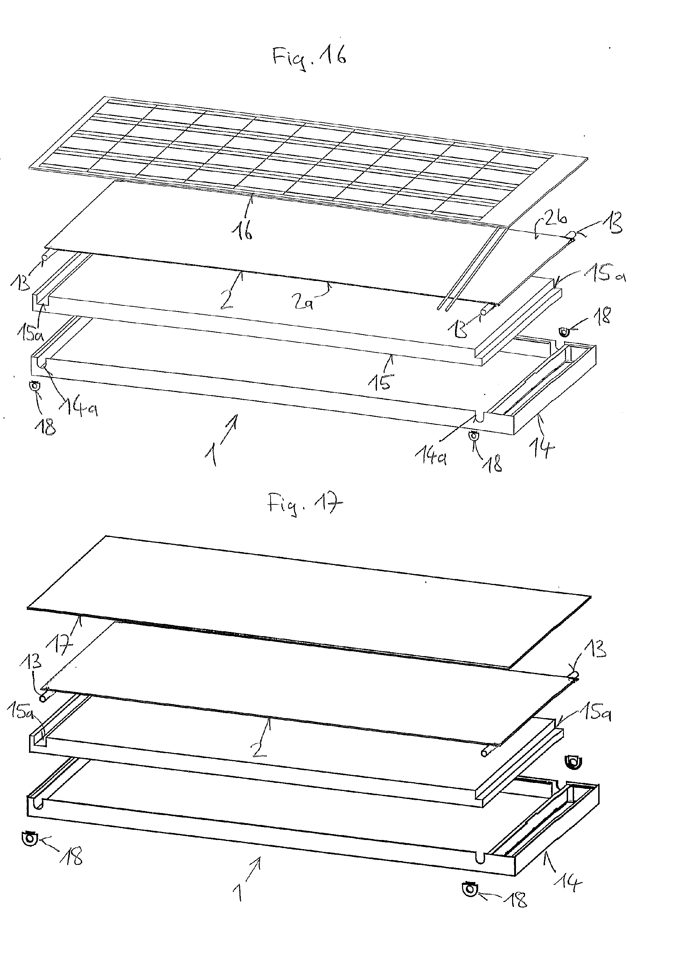

Die gängigen Sonnenkollektoren sind gemäss Fig. 16 bis 26 als Wärmetauscher mit einem Gehäuse 14 aufgebaut. Das Gehäuse 14 umfasst einen Boden und Seitenwände. In den Hohlraum des Gehäuses 14 wird vorzugsweise zuerst eine Isolierung 15 eingelegt, welche zur Aufnahme der Rohrbereiche 12 Ausnehmungen 15a aufweist. Die miteinander verbundenen Bleche 2a, 2b mit den in die Rohrbereiche 12 eingesetzten Verbindungsstücken 13 werden auf der Isolierung 15 in das Gehäuse 14 eingelegt. Um die Verbindungsstücke 13 aus dem Gehäuse 14 herauszuführen, umfassen die Wände des Gehäuses 14 Öffnungen 14a. Mit in den Öffnungen 14a in Längsrichtung des Wärmetauschers 1 verschiebbar befestigten Durchführung 18 können die Verbindungsstücke 13 so aus dem Gehäuse 14 geführt werden, dass dieses im Wesentlichen dicht verschlossen werden kann.

Als oberer Abschluss des Gehäuses 15 wird gegebenenfalls eine Absorberplatte in der Form eines Fotovoltaikelements 16 mit einer Dichtung am Gehäuse 14 befestigt. Das gesamte Element kann nun elektrische Energie und Wärmeenergie bereitstellen. Mit dem Abführen der Wärmeenergie über die Wärmetauscherplatten 2 kann das Fotovoltaikelement auf einer optimalen Betriebstemperatur gehalten werden. Gegebenenfalls wird als oberer Abschluss des Gehäuses 15 eine Glasplatte 17 mit einer Dichtung am Gehäuse 14 befestigt.

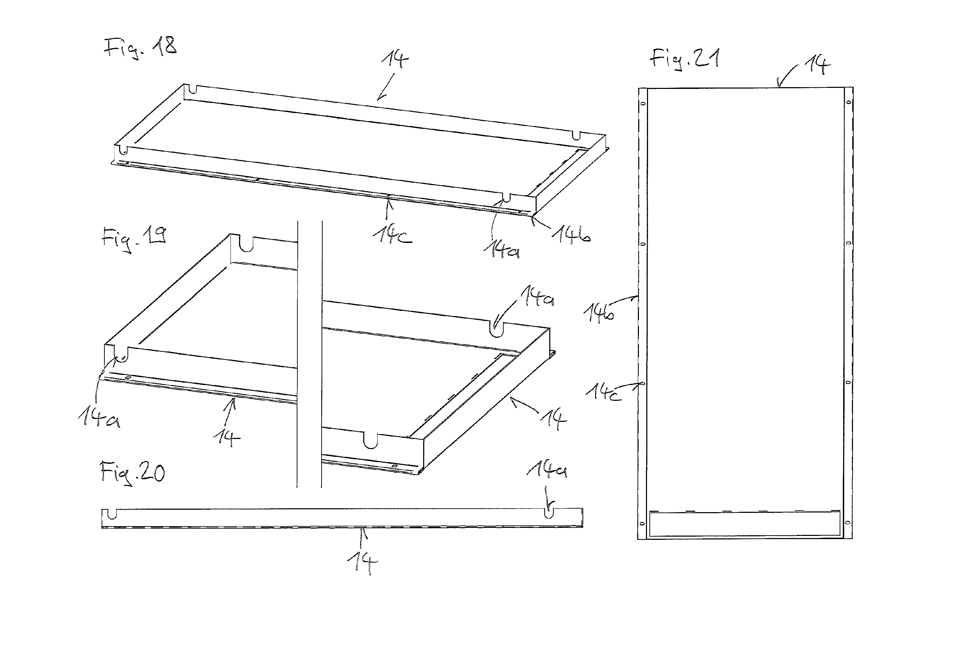

Die Fig. 18 bis 21 zeigen ein Gehäuse 14, das einen Falzrand 14b mit Befestigungslöchern 14c umfasst. Ein Wärmetauscher mit diesem Gehäuse 14 kann einfach über die Befestigungslöcher 14c auf einer Tragstruktur, insbesondere auf dem Dach, befestigt werden.

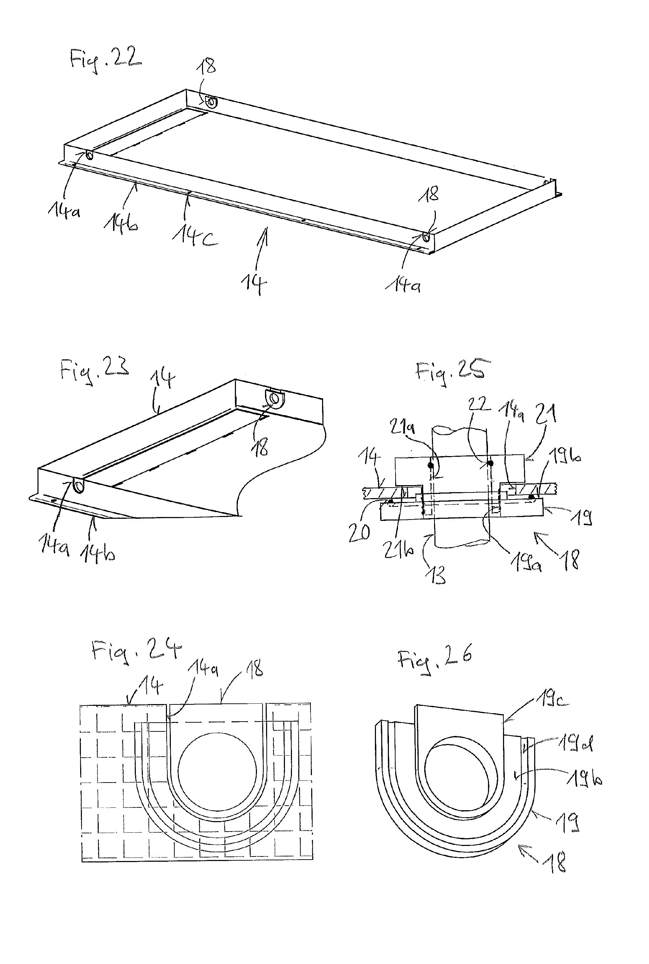

Eine am Gehäuse 14 verschiebbare Durchführung 18 umfasst gemäss Fig. 25 ein inneres Teil 19 und ein äusseres Teil 21, wobei die Teile zusammen an einer Öffnung 14a des Gehäuses 14 befestigt sind. Das innere Teil 19 umfasst eine erste Bohrung 19a mit einem Innengewinde und eine zumindest teilweise um die Bohrung 19a führende, am Gehäuse anlegbare Dichtung 20, die in einer ersten Nut 19d an einer ersten Pressfläche 19b des inneren Teils 19 angeordnet ist. Mit einem nach oben stehenden Steg 19c kann das innere Teil 19 am Gehäuse 14 auch bei den Öffnungen 14a einen durchgehenden oberen Rand bereitstellen. Das äussere Teil 21 umfasst eine von aussen an das Gehäuse 14 anlegbare zweite Pressfläche 21b, ein an das Innengewinde angepasstes Aussengewinde und eine zweite Bohrung 21a zur Aufnahme eines Verbindungsstücks 13, wobei an der zweiten Bohrung 21a in einer zweiten Nut ein Dichtungsring 22 angeordnet ist, der dicht an das Verbindungsstück 13 anliegt.

Die Durchführung 18 kann auf dem Verbindungsstück 13 in die Öffnung 14 eingeführt werden. Durch das Festschrauben des nach aussen stehenden äusseren Teils 21 am inneren Teil 19 wird die Durchführung mit einer Klemmkraft am Gehäuse 14 festgesetzt, welche wärmeausdehnungsbedingte Relativbewegungen zwischen den Verbindungsstücken 13 und dem Gehäuse 14 zulässt.

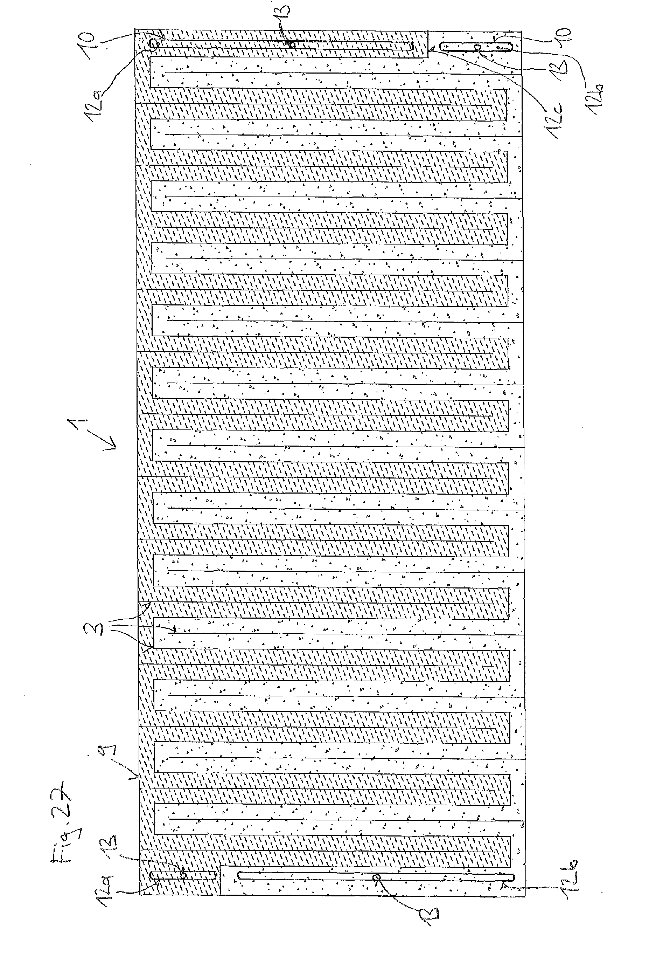

Fig. 27 zeigt eine schematische Darstellung eines Plattenwärmetauschers mit zwei Kanälen, die mäanderförmig ineinander eingreifend ausgebildet sind. Die inneren Begrenzungen der Kanäle sind als Klebstoffverbindungen 3 ausgebildet. Seitlich sind Abschluss-Klebstoffverbindungen 9 angeordnet. Die Rohrbereiche 12 bei den Enden der Wärmetauscher sind je in der Form von zwei getrennten Erschliessungsbereichen ausgebildet und die Klebstoffverbindungen umfassen mindestens eine von einem Trennbereich 12c zwischen zwei ersten Erschliessungsbereichen zum Trennbereich zwischen den zwei anderen Erschliessungsbereichen führende durchgängige Trennlinie in der Form der Klebstoffverbindungen 3, so dass zwei getrennte Teilbereiche 12a und 12b mit je eigenen Erschliessungsbereichen entstehen. In diesem Wärmetauscher 1 kann ein erstes Fluid von einem Teilbereich 12a zum anderen Teilbereich 12a und ein zweites Fluid von einem Teilbereich 12b zum anderen Teilbereich 12b geführt wird. Die Verbindungsstücke 13 werden an entsprechende Zu- und Abführleitungen angeschlossen.

## Patentansprüche

1. Wärmetauscher (1) mit zwei Platten (2), einem dazwischen ausgebildeten Hohlraum (8) und mindestens zwei Anschlüssen an den Hohlraum (8), **gekennzeichnet durch** Klebstoffverbindungen (3) zwischen den beiden Platten (2),
im Wärmetauscher fest angeordneten Distanzhaltern (4, 5, 6, 7), wobei sich sowohl die Distanzhalter (4, 5, 6, 7) als auch die Klebstoffverbindungen (3) über den gesamten Abstand der Platten (2) bzw. über die gesamte Mächtigkeit des Hohlraums (8) erstrecken und somit die Distanzhalter (4, 5, 6, 7) und die Klebstoffverbindungen (3) senkrecht zu den Plattenebenen die gleiche Ausdehnung aufweisen, und
Erschliessungsbereiche in der Form von rohrsegmentförmigen Bereichen (10), die **durch** mindestens einen Tiefziehschritt an einer Platte (2b) ausgeformt sind, wobei
sich die tiefgezogenen Bereiche (10) nicht bis zu den Seitenrändern des Wärmetauschers (1) erstrecken,
die Platte (2b) mit den tiefgezogenen Erschliessungsbereichen rund um die Erschliessungsbereiche Randbereiche umfasst, welche in der Ebene der Platteninnenseite liegen,
die rohrsegmentförmigen Bereiche (10) gegen den Hohlraum (8) offen sind und an den rohrsegmentförmigen Bereichen (10) je mindestens ein Verbindungsstück (13) als Anschluss angeordnet ist.

2. Wärmetauscher (1) nach Anspruch 1, **dadurch gekennzeichnet, dass** die Klebstoffverbindungen von Polymerisationsklebstoff, vorzugsweise Methylmethacrylat-Klebstoff gebildet sind.

3. Wärmetauscher (1) nach Anspruch 1 oder 2, **dadurch gekennzeichnet, dass** die für das Ausbilden der Klebstoffverbindungen aufgetragene Klebstoffmasse beim Auftragen eine Viskosität von mindestens 90'000 cP (Centipoise), insbesondere mindestens 100'000 cP (Centipoise), vorzugsweise im Wesentlichen 110'000 cP (Centipoise) aufweist.

4. Wärmetauscher nach einem der Ansprüche 1 bis 3, **dadurch gekennzeichnet, dass** die Distanzhalter als im Wesentlichen kugelförmige Teilchen (4) in zumindest einem Teil der Klebstoffverbindungen (3) angeordnet sind, wobei der Durchmesser der kugelförmige Teilchen (4) der Mächtigkeit des Hohlraumes (8) entspricht.

5. Wärmetauscher (1) nach einem der Ansprüche 1 bis 3, **dadurch gekennzeichnet, dass** die Distanzhalter von vorstehenden Teilflächen (6) mindestens einer Platte (2) gebildet werden, wobei diese vorstehenden Teilflächen (6) jeweils gegen die andere Platte (2) vorstehen und die gesamte Vorstehhöhe bei den vorstehenden Teilflächen (6) der Mächtigkeit des Hohlraumes (8) entspricht.

6. Wärmetauscher (1) nach einem der Ansprüche 1 bis 3, **dadurch gekennzeichnet, dass** die Distanzhalter von auf eine bei der Herstellung des Wärmetauschers (1) unten liegende Platte (2) aufgelegten Teilen (5) gebildet werden und um die Teile (5) oder zumindest seitlich bei den Teilen (5) Klebstoffverbindungen (3) ausgebildet sind.

7. Wärmetauscher (1) nach einem der Ansprüche 1 bis 6, **dadurch gekennzeichnet, dass** mindestens eine der zwei Platten (2) von einem Blech (2a, 2b) gebildet wird, die rohrsegmentförmigen Bereiche (10) an zwei voneinander abgewandten Seitenbereichen des Wärmetauschers angeordnet sind und die Verbindungsstück (13) seitlich nicht über den Wärmetauscher (1) vorstehen.

8. Wärmetauscher (1) nach einem der Ansprüche 1 bis 7, **dadurch gekennzeichnet, dass** der Hohlraum (8) an allen vier Seiten des Wärmetauschers (1) dicht verschlossen ist, wobei zum dichten Verschliessen des Hohlraumes (8) entlang dieser Seiten Abschluss-Klebstoffverbindungen (9), vorzugsweise aus Polymerisationsklebstoff, insbesondere aus Methylmethacrylat-Klebstoff, ausgebildet sind.

9. Wärmetauscher (1) nach einem der Ansprüche 1 bis 8, **dadurch gekennzeichnet, dass** er ein Gehäuse (14) umfasst, in dem die Platten (2a, 2b) mit dem Hohlraum (8) und den Anschlüssen (13), vorzugsweise auf eine vorgängig eingelegte Isolierung (15), aufgelegt sind, und insbesondere eine Glasplatte (17) das Gehäuse (14) mit den darin aufgenommenen Elementen abschliesst und die Anschlüsse (13) des Wärmetauschers durch das Gehäuse nach aussen geführt werden.

10. Wärmetauscher (1) nach Anspruch 9, **dadurch gekennzeichnet, dass** eine am Gehäuse (14) verschiebbare Durchführung (18) eingesetzt ist, die ein inneres und ein äusseres Teil (19, 21) umfasst, wobei diese Teile (19, 21) zusammen an einer Öffnung (14a) des Gehäuses (14) befestigt sind, das innere Teil (19) eine erste Bohrung (19a) umfasst mit einem Innengewinde und einer zumindest teilweise um die erste Bohrung (19a) führenden, am Gehäuse (14) anlegbaren Dichtung (20), die an einer ersten Pressfläche (19b) des inneren Teils (19) angeordnet ist, das äussere Teil (21) eine von aussen an das Gehäuse (14) anlegbare zweite Pressfläche (21 b), ein an das Innengewinde angepasstes Aussengewinde und eine zweite Bohrung (21 a) zur Aufnahme eines Anschlusses (13), wobei an der zweiten Bohrung (21 a) ein Dichtungsring (22) angeordnet ist, der dicht an den Anschluss (13) anliegt.

11. Wärmetauscher (1) nach einem der Ansprüche 1 bis 9, **dadurch gekennzeichnet, dass** die Klebstoffverbindungen (3), die sich über die gesamte Mächtigkeit des Hohlraums (8) zwischen den Platten (2) erstrecken, in Schnittebenen parallel zu den Platten (2) gebogene Seitenlinien aufweisen und insbesondere s-förmig ausgebildet sind.

12. Verfahren zum Herstellen von Wärmetauschern (1) mit zwei Platten (2), einem dazwischen ausgebildeten Hohlraum (8) und mindestens zwei Anschlüssen (13) an den Hohlraum (8), **gekennzeichnet durch**
das Ausbilden von Erschliessungsbereichen in der Form von rohrsegmentförmigen Bereichen (10), die **durch** mindestens einen Tiefziehschritt an einer Platte (2b) ausgeformt werden, wobei
sich die tiefgezogenen Bereiche (10) nicht bis zu den Seitenrändern des Wärmetauschers (1) erstrecken,
die Platte (2b) mit den tiefgezogenen Erschliessungsbereichen rund um die Erschliessungsbereiche Randbereiche umfasst, welche in der Ebene der Platteninnenseite liegen,
die rohrsegmentförmigen Bereiche (10) gegen den Hohlraum (8) offen sind und an den rohrsegmentförmigen Bereiche (10) je mindestens ein Verbindungsstück (13) als Anschluss angeordnet wird,
das Bereitstellen von fest zwischen den Platten (2) angeordneten Distanzhaltern (4, 5, 6, 7) und
das Auftragen von Klebstoffmasse auf eine bei der Herstellung des Wärmetauschers (1) unten liegende erste Platte (2), wobei sich sowohl die Distanzhalter (4, 5, 6, 7) als auch die Klebstoffverbindungen (3) über den gesamten Abstand der Platten (2) bzw. über die gesamte Mächtigkeit des Hohlraums (8) erstrecken und somit die Distanzhalter (4, 5, 6, 7) und die Klebstoffverbindungen (3) senkrecht zu den Plattenebenen die gleiche Ausdehnung aufweisen.

13. Verfahren zum Herstellen von Wärmetauschern (1) nach Anspruch 12, **dadurch gekennzeichnet, dass** für das Bereitstellen von Distanzhaltern (7) im Wesentlichen kugelförmige Teilchen (4) in zumindest einem Teil der Klebstoffverbindungen (3) angeordnet werden, der Durchmesser der kugelförmige Teilchen (4) der Mächtigkeit des Hohlraumes (8) entspricht und die Klebstoffmasse beim Auftragen eine Viskosität von mindestens 90'000 cP (Centipoise) aufweist.

14. Verfahren zum Herstellen von Wärmetauschern (1) nach Anspruch 12 oder 13, **dadurch gekennzeichnet, dass** der Hohlraum (8) an allen vier Seiten des Wärmetauschers (1) dicht verschlossen wird, wobei zum dichten Verschliessen des Hohlraumes (8) entlang dieser Seiten Abschluss-Klebstoffverbindungen (9), vorzugsweise aus Polymerisationsklebstoff, insbesondere aus Methylmethacrylat-Klebstoff, ausgebildet werden.

15. Verwendung von Wärmetauschern nach einem der Ansprüche 1 bis 11 als Sonnenkollektoren an einer Fassade oder an einem Dach.
